# EUROPEAN PATENT APPLICATION

(11) **EP 3 991 879 A1**
(43) Date of publication of application: **04.05.2022**
(21) Application number: 20920767.9
(22) Date of filing: 04.09.2020
(51) Int. Cl.: B22F 3/105, B22F 3/16, F01D 9/02, C22C 19/07, F01D 25/00, B33Y 80/00, B33Y 70/00

(54) **COBALT-BASED ALLOY MATERIAL AND COBALT-BASED ALLOY PRODUCT**

(71) Applicant: Mitsubishi Heavy Industries, Ltd., 100-8332 Tokyo (JP)
(72) Inventor: WANG, Yuting, Yokohama-shi, Kanagawa 2208401 (JP); IMANO, Shinya, Yokohama-shi, Kanagawa 2208401 (JP); OTA, Atsuo, Yokohama-shi, Kanagawa 2208401 (JP)
(74) Representative: Strehl Schübel-Hopf & Partner
(86) International application number: PCT/JP2020/033546
(87) International publication number: WO 2022/049716

(57) **Abstract**

There is provided a cobalt-based alloy material comprising: in mass %, 0.08-0.25% C; 0.003-0.2% N, the total amount of C and N being 0.083-0.28%; 0.1% or less B; 10-30% Cr; 5% or less Fe and 30% or less Ni, the total amount of Fe and Ni being 30% or less; W and/or Mo, the total amount of W and Mo being 5-12%; Al and/or Si, at least one of Al and Si being more than 0.5% and 3% or less, and the total amount of Al and Si being more than 0.5% and 4% or less; 0.5% or less Mn; 0.5-4% of an M component being a transition metal other than W and Mo and having an atomic radius of more than 130 pm; and the balance being Co and impurities. There is also provided a product formed from the cobalt-based alloy material.

## Description

### TECHNICAL FIELD OF THE INVENTION

The present invention relates to cobalt based alloys having excellent mechanical properties and, in particular, to a cobalt based alloy material suitable for additive manufacturing and a cobalt based alloy product made of the alloy material.

### DESCRIPTION OF BACKGROUND ART

Cobalt (Co) based alloy materials, along with nickel (Ni) based alloy ones, are representative heat resistant alloy materials. Also referred to as superalloys, they are widely used for high temperature members (components used under high temperature environment, e.g. gas turbine members, steam turbine members, etc.). Although Co based alloy materials are higher in material costs than Ni based alloy ones, they have been used for applications such as turbine stator blades and combustor members because of their excellence in corrosion resistance and abrasion resistance, and their ease of solid solution strengthening.

In Ni based alloy materials, various improvements that have been made so far in composition and manufacturing processes of heat resistant alloy materials have led to the development of strengthening through γ' phase (e.g. Ni₃(Al, Ti) phase) precipitation, which has now become mainstream. On the other hand, in Co based alloy materials, an intermetallic compound phase that contributes to improving mechanical properties, like the γ' phase in Ni based alloy ones, hardly precipitates, which has prompted research on carbide phase precipitation strengthening.

For example, Patent Literature 1 (JP Shou 61 (1986)-243143 A) discloses a Co based superplastic alloy made up of a Co based alloy matrix having a crystal grain size of equal to or less than 10 µm and carbide grains in a granular form or a particulate form having a grain size of 0.5 to 10 µm precipitated in the matrix. The Co based alloy includes 0.15 to 1 wt. % of C, 15 to 40 wt. % of Cr, 3 to 15 wt. % of W or Mo, 1 wt. % or less of B, 0 to 20 wt. % of Ni, 0 to 1.0 wt. % of Nb, 0 to 1.0 wt. % of Zr, 0 to 1.0 wt. % of Ta, 0 to 3 wt. % of Ti, 0 to 3 wt. % of Al, and the balance of Co.

Meanwhile, in recent years, three dimensional shaping technologies such as additive manufacturing or AM has received much attention as a technique for manufacturing finished products with a complicated shape by near net shaping. To apply the three dimensional shaping technology to heat resistant alloy components, vigorous research and development activities are currently being carried out.

Patent Literature 2 (JP 2019-049022 A) will be described later.

### CITATION LIST

### PATENT LITERATURE

Patent Literature 1: JP Shou 61 (1986)-243143 A, and
Patent Literature 2: JP 2019-049022 A.

### SUMMARY OF THE INVENTION

### PROBLEMS TO BE SOLVED BY THE INVENTION

Since the AM is capable of directly forming even components of complicated shape, manufacturing of turbine high temperature components by the AM is very attractive in terms of reduction of manufacturing work time and improvement of manufacturing yield (i.e. reduction of manufacturing cost).

On the other hand, manufacturing the Co based alloy materials does not require precipitation of an intermetallic compound phase such as the γ' phase as in Ni based alloy materials, so Co based alloy materials do not contain plenty of Al or Ti easily oxidized, comparing the Ni based alloy materials. This means melting and forging processes in the air atmosphere are available for their manufacturing. Therefore, such Co based alloy materials are considered to be advantageous in manufacturing of alloy powder for AM and manufacturing of AM articles. Also, the Co based alloy materials have advantages with corrosion resistance and abrasion resistance comparable to or superior to those of the Ni based alloy materials.

However, conventional Co based alloy materials have disadvantages of mechanical properties inferior to those of γ' phase precipitation-strengthened Ni based alloy materials. In other words, if a Co based alloy material could achieve mechanical properties comparable to or superior to those of the γ' phase precipitation-strengthened Ni based alloy materials, AM articles of the Co based alloy material would become attractive materials suitable for high temperature components.

The present invention was made in view of the foregoing and has an objective to provide a Co based alloy product having mechanical properties comparable to or superior to those of the precipitation strengthened Ni based alloy materials and a Co based alloy material suitable for manufacturing the same.

### SOLUTION TO PROBLEMS

(I) According to one aspect of the present invention, there is provided a product formed of a cobalt based alloy material. The cobalt based alloy product has a chemical composition including: 0.08 to 0.25 mass % of carbon (C); 0.003 to 0.2 mass % of nitrogen (N), the total amount of the C and the N being 0.083 to 0.28 mass %; 0.1 mass % or less of boron (B); 10 to 30 mass % of chromium (Cr); 5 mass % or less of iron (Fe) and 30 mass % or less of nickel (Ni), the total amount of the Fe and the Ni being 30 mass % or less; tungsten (W) and/or molybdenum (Mo), the total amount of the W and the Mo being 5 to 12 mass %; aluminum (Al) and/or silicon (Si), at least one of the Al and the Si being more than 0.5 mass % and 3 mass % or less, and the total amount of the Al and the Si being more than 0.5 mass % and 4 mass % or less; 0.5 mass % or less of manganese (Mn); 0.5 to 4 mass % of an M component being a transition metal other than W and Mo and having an atomic radius of more than 130 pm; and the balance being cobalt (Co) and impurities. The impurities include 0.04 mass % or less of oxygen (O). The product is a polycrystalline body of matrix phase crystal grains. In the matrix phase crystal grains, segregation cells with an average size of 0.13 to 2 µm are formed, in that the M component is segregated in boundary regions of the segregation cells. Or, in the matrix phase crystal grains, post-segregation cells with an average size of 0.13 to 2 µm are formed, in that particles of MC type carbide phase, M(C,N) type carbonitride phase and/or MN type nitride phase including the M component are dispersedly precipitated along boundary regions of the post-segregation cells.
   Meanwhile, in the above-described MC, M(C,N) and MN types, "M" means a transition metal, "C" means carbon and "N" means nitrogen.
(II) According to another aspect of the invention, there is provided a cobalt based alloy material. The cobalt based alloy material has a chemical composition including: 0.08 to 0.25 mass % of C; 0.003 to 0.2 mass % of N, the total amount of the C and the N being 0.083 to 0.28 mass %; 0.1 mass % or less of B; 10 to 30 mass % of Cr; 5 mass % or less of Fe and 30 mass % or less of Ni, the total amount of the Fe and the Ni being 30 mass % or less; W and/or Mo, the total amount of the W and the Mo being 5 to 12 mass %; Al and/or Si, at least one of the Al and the Si being more than 0.5 mass % and 3 mass % or less, and the total amount of the Al and the Si being more than 0.5 mass % and 4 mass % or less; 0.5 mass % or less of Mn; 0.5 to 4 mass % of an M component being a transition metal other than W and Mo and having an atomic radius of more than 130 pm; and the balance being Co and impurities. The impurities include 0.04 mass % or less of O.

In the above Co based alloy product (I) and the above Co based alloy material (II) of the invention, the following changes and modifications can be made.
(i) The chemical composition may comprise the N of more than 0.04 mass % and 0.2 mass % or less, the total amount of the C and the N being more than 0.12 mass % and 0.28 mass % or less.
(ii) The M component of the chemical composition may be at least one of titanium (Ti), zirconium (Zr), hafnium (Hf), vanadium (V), niobium (Nb) and tantalum (Ta).
(iii) In the case that the chemical composition includes the Ti as the M component, content of the Ti may be 0.01 to 1 mass %; in the case that the chemical composition includes the Zr as the M component, content of the Zr may be 0.05 to 1.5 mass %; in the case that the chemical composition includes the Hf as the M component, content of the Hf may be 0.01 to 0.5 mass %, in the case that the chemical composition includes the V as the M component, content of the V may be 0.01 to 0.5 mass %; in the case that the chemical composition includes the Nb as the M component, content of the Nb may be 0.02 to 1 mass %; and in the case that the chemical composition includes the Ta as the M component, content of the Ta may be 0.05 to 1.5 mass %.
(iv) The Zr may be an essential component as the M component of the chemical composition.
(v) The M component of the chemical composition may be three or more of the Ti, the Zr, the Hf, the V, the Nb and the Ta.

In addition, in the above Co based alloy product (I) of the invention, the following changes and modifications can be made.
(vi) The product may exhibit an oxidation resistance property in that by an oxidation test under conditions of a temperature 950°C in the air atmosphere, a mass change ratio for 1000 hours holding is larger than that for 500 hours holding.
(vii) The product may be a high temperature member.
(viii) The high temperature member may be a turbine stator blade, a turbine rotor blade, a turbine combustor nozzle, or a heat exchanger.

Furthermore, in the above Co based alloy material (II) of the invention, the following changes and modifications can be made.
(ix) The alloy material may be a powder having a particle size range of 5 to 100 µm.

### ADVANTAGES OF THE INVENTION

According to the present invention, there can be provided a Co based alloy product having mechanical properties comparable to or superior to those of the precipitation strengthened Ni based alloy materials and a Co based alloy material suitable for manufacturing the same.

### BRIEF DESCRIPTION OF THE DRAWINGS

FIG. 1 is a flow diagram showing an exemplary process of a method for manufacturing a Co based alloy product according to an embodiment of the present invention;
FIG. 2 is a scanning electron microscopy (SEM) image showing an exemplary microstructure of a Co based alloy additively manufactured article obtained by a selective laser melting step;
FIG. 3 is an SEM image showing an exemplary microstructure of a Co based alloy additively manufactured article obtained by a strain relaxation annealing step;
FIG. 4 is a schematic illustration of a perspective view showing an exemplary turbine stator blade which is a Co based alloy product as a high temperature member according to an embodiment of the invention;
FIG. 5 is a schematic illustration of a perspective view showing an exemplary turbine rotor blade which is a Co based alloy product as another high temperature member according to an embodiment of the invention;
FIG. 6 is a schematic illustration of a cross-sectional view showing an exemplary gas turbine equipped with a Co based alloy product according to an embodiment of the invention;
FIG. 7 is a schematic illustration of a perspective view showing an exemplary heat exchanger which is another Co based alloy product as a high temperature member according to an embodiment of the invention; and
FIG. 8 is a graph showing a relationship between holding time and mass change ratio in an oxidation test to a Co based alloy product.

### DETAILED DESCRIPTION OF THE PREFERRED EMBODIMENTS

### [Basic Concept of the Invention]

As mentioned before, various research and development activities have been carried out on strengthening of Co based alloy materials by means of precipitation of a carbide phase of a transition metal. Examples of the carbide phase that can be precipitated include MC type, M₂C type, M₃C type, M₆C type, M₇C type, and M₂₃C₆ type carbide phases.

In the conventional Co based alloy materials, particles of the carbide phases often precipitate along final solidification portions (e.g. dendrite boundaries, crystal grain boundaries, etc. of the matrix phase) at the casting stages of the Co based alloys. In a general cast material of a Co based alloy, for example, the average spacing between dendrite boundaries and the average crystal grain size are on the order of 10¹ to 10² µm, and therefore the average spacing between carbide phase particles is also on the order of 10¹ to 10² µm. Furthermore, even with the relatively fast solidification rate of laser welding, for example, the average spacing between carbide phase particles at the solidified portions is around 5 µm.

Precipitation strengthening in alloys is generally known to be inversely proportional to the average spacing between precipitates, and it is considered that precipitation strengthening is effective only when the average spacing between precipitates is around 2 µm or less. However, with the above-mentioned conventional technology, the average spacing between precipitates has not reached this level in a Co based alloy material, and sufficient precipitation strengthening effect has not been achieved. In other words, with the conventional technology, it has been difficult to finely and dispersedly precipitate carbide phase particles that might contribute to strengthening alloys. This would be the main factor behind the fact that Co based alloy materials have been said to have mechanical properties inferior to those of precipitation-strengthened Ni based alloy materials.

The present inventors thought that if they were able to dispersedly precipitate carbide phase particles contributing to precipitation strengthening in the matrix phase crystal grains, they would be able to dramatically improve mechanical properties of Co based alloy materials.

In the initial stages of the research, the inventors had considered that it would be effective to generate a carbide phase of a metal element that is highly solid soluble and hardly segregate in the Co based alloy matrix phase, so that the carbide phase was easy to precipitate dispersedly in the matrix phase crystal grains. However, precipitation of the Cr carbide phase (in this case, Cr₂₃C₆ phase) was not so effective to strengthen the Co based alloy material. Then, as an idea of reversal, the inventors considered to intentionally form carbides of metal elements having tendency to segregate at the solidification stages of the Co based alloys. The inventors focused on the atomic radii of metal elements constituting the Co based alloys.

For example, the Co based alloy disclosed in Patent Literature 1 (JP Shou 61 (1986)-243143 A) includes, as a metal element, Co (atomic radius: 125 pm), Cr (atomic radius: 128 pm), Ni (atomic radius: 124 pm), W (atomic radius: 139 pm), Mo (atomic radius: 139 pm), Nb (atomic radius: 146 pm), Zr (atomic radius: 160 pm), Ta (atomic radius: 146 pm), Ti (atomic radius: 147 pm), and Al (atomic radius: 143 pm). In the Co based alloy of Patent Literature 1, since more than 70% by mass is made from Co, Cr and Ni, the atomic radius of most constituent atoms of the alloy is 130 pm or less. In other words, it was considered that each of W, Mo, Nb, Zr, Ta, Ti and Al having the atomic radius of more than 130 pm might be easy to segregate at the solidification stage of the Co based alloy. And then, the inventors carried out the research on a method for dispersedly precipitating the carbide phases of these transition metals except Al in the matrix phase crystal grains.

As a result, the inventors found that segregation cells with a small size were formed, in which specific components (components forming carbide phases contributing to alloy strengthening) were segregated, in the matrix phase crystal grains of a Co based alloy additively manufactured article by means of optimizing the alloy composition and controlling the amount of heat input for local melting and rapid solidification in an additive manufacturing method (in particular, selective laser melting), as described in Patent Literature 2 (JP 2019-049022 A). Also, they found that particles of precipitation reinforcing carbide phase were dispersedly precipitated at portions assumed to be the triple points/quadruple points of the boundary regions among the segregation cells. And then, it was confirmed that such Co based alloy material had the mechanical properties comparable to or superior to those of precipitation strengthened Ni based alloy materials.

The inventors continued to study the optimizations of the alloy composition and the manufacturing method. Consequently, it has been revealed that the mechanical properties of Co based alloy material are further improved in the alloy composition with high aluminum content, high silicon content and/or high nitrogen content which were considered undesirable at the time of study of Patent Literature 2. The present invention has been made based on these findings.

Preferred embodiments of the invention will be hereinafter described along a manufacturing procedure with reference to the accompanying drawings.

### [Method for Manufacturing Co Based Alloy Product]

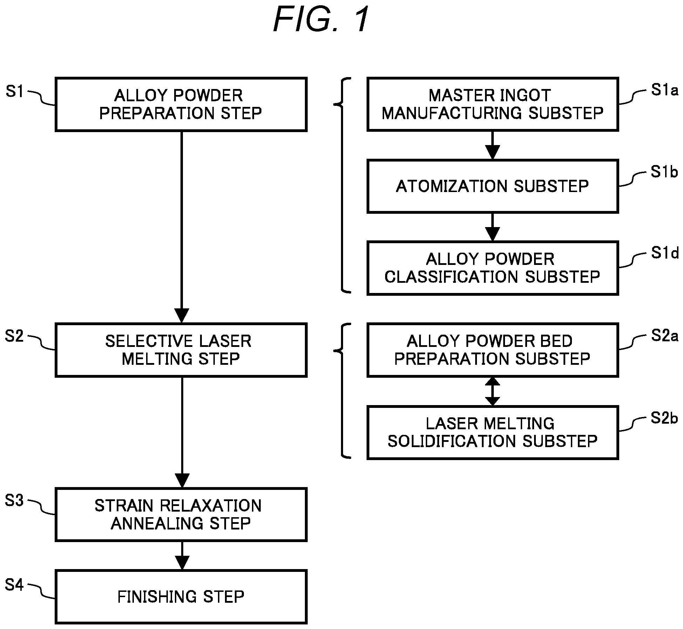

FIG. 1 is a flow diagram showing an exemplary process of a method for manufacturing a Co based alloy product according to an embodiment of the invention. As shown in FIG. 1, the method for manufacturing a Co based alloy product roughly includes: an alloy powder preparation step S1 of preparing a Co based alloy powder; a selective laser melting step S2 of forming the prepared Co based alloy powder into an AM article with a desired shape. The alloy powder obtained by the step S1 is one aspect of a Co based alloy material according to the invention, and the AM article obtained by the step S2 is one aspect of a Co based alloy product according to the invention.

As necessary, the AM article obtained by the step S2 may be subjected to a strain relaxation annealing step S3 of relaxing a residual internal strain of the AM article, and may be further subjected to a finishing step S4 of forming a thermal barrier coating (TBC) and/or finishing a surface. These steps S3 and S4 are not essential, but they are preferable to be performed based on considerations of a shape and a usage environment of the Co based alloy product. The AM article obtained through the step S3 and/or the step S4 is another aspect of a Co based alloy product according to the invention.

Although the manufacturing procedure shown in FIG. 1 is roughly similar to that of Patent Literature 2, there is a difference between Patent Literature 2 and the invention in being usable of an as-built AM article obtained by the selective laser melting step S2 as a Co based alloy product (in other words, not conducting a solution heat treatment and an aging heat treatment described in Patent Literature 2). Furthermore, in the case that controlling the nitrogen content in Co based alloy higher, there is another difference between Patent Literature 2 and the invention in controlling the amount (existence ratio) of nitrogen atoms in the atmosphere during the alloy powder preparation step.

Each step will be hereinafter described in more detail.

### (Alloy Powder Preparation Step)

In the step S1, a Co based alloy powder having a predetermined chemical composition is prepared. The chemical composition preferably includes: 0.08 to 0.25 mass % of C; 0.003 to 0.2 mass % of N, the total amount of the C and the N being 0.083 to 0.28 mass %; 0.1 mass % or less of B; 10 to 30 mass % of Cr; 5 mass % or less of Fe and 30 mass % or less of Ni, the total amount of the Fe and the Ni being 30 mass % or less; W and/or Mo, the total amount of the W and the Mo being 5 to 12 mass %; Al and/or Si, at least one of the Al and the Si being more than 0.5 mass % and 3 mass % or less, and the total amount of the Al and the Si being more than 0.5 mass % and 4 mass % or less; 0.5 mass % or less of Mn; 0.5 to 4 mass % of an M component being a transition metal other than W and Mo and having an atomic radius of more than 130 pm; and the balance being Co and impurities. As impurities, 0.04 mass % or less of O may be included.

### C: 0.08 mass % or more and 0.25 mass % or less

The C component is an important component that constitutes an MC type carbide phase (carbide phase of at least one of Ti, Zr, Hf, V, Nb and Ta) and/or an M(C,N) type carbonitride phase (carbonitride phase of at least one of Ti, Zr, V, Nb and Ta) to serve as a precipitation strengthening phase. The content of the C component is preferably 0.08 to 0.25 mass %, more preferably 0.1 to 0.2 mass %, and even more preferably 0.12 to 0.18 mass %. When the C content is less than 0.08 mass %, the amount of precipitation of the precipitation strengthening phase (MC type carbide phase and/or M(C,N) type carbonitride phase) is insufficient, resulting in an insufficient effect of improving the mechanical properties. By contrast, when the C content is over 0.25 mass %, carbide phases other than the MC type carbide phase precipitate excessively, and/or the alloy material becomes excessively hard, which leads to deteriorated toughness.

### N: 0.003 mass % or more and 0.2 mass % or less

The N component is an important component that constitutes the M(C,N) type carbonitride phase and/or an MN type nitride phase (nitride phase of at least one of Ti, Zr, V, Nb and Ta). The content of the N component is preferably 0.003 to 0.2 mass %, more preferably more than 0.04 mass % and 0.19 mass % or less, and even more preferably 0.13 to 0.18 mass %. When the N content is less than 0.003 mass %, the advantageous effects due to the N component are insufficient. When the N content is 0.04 mass % or less, while the advantageous effects of precipitation of the M(C,N) type carbonitride phase and/or the MN type nitride phase are insufficient, there is no particular problem. In contrast, when the N content is over 0.2 mass %, the mechanical properties of the final product would deteriorate.

Mechanism of improving the mechanical properties of Co based alloy materials at a higher N content than before has not been clarified at the present. However, by coexisting the C and N components in pointful amounts, it would be possible that the MC type carbide phase, the M(C,N) type carbonitride phase and/or the MN type nitride phase are formed well-balanced and stably, and contribute to dispersed precipitation. The total amount of the C and the N is preferably 0.083 to 0.28 mass %, more preferably more than 0.12 mass % and 0.27 mass % or less, even more preferably 0.16 to 0.25 mass %.

### B: 0.1 mass % or less

The B component contributes to improving bondability between crystal grain boundaries (so-called grain boundary strengthening). Although the B is not an essential component, when it is contained in the alloy, the content of the B component is preferably 0.1 mass % or less and more preferably 0.005 to 0.05 mass %. When the B component is over 0.1 mass%, cracking (e.g. solidification cracking) is prone to occur during formation of the AM article.

### Cr: 10 mass % or more and 30 mass % or less

The Cr component contributes to improving corrosion resistance and oxidation resistance. The content of the Cr component is preferably 10 to 30 mass % and more preferably 15 to 27 mass %. In the case where a corrosion resistant coating layer is provided on the outermost surface of the Co based alloy product, the content of the Cr component is even more preferably 10 to 18 mass %. When the Cr content is less than 10 mass %, advantageous effects such as improvements of the corrosion resistance and the oxidation resistance are insufficient. When the Cr content is over 30 mass %, the brittle σ phase and/or the excessive amount of Cr carbide phase are generated, resulting in deteriorated mechanical properties (i.e. toughness, ductility, strength, etc.). Meanwhile, in the invention Cr carbide phase generation itself in the article is not denied.

### Ni: 30 mass % or less

Being similar to Co component in characteristics but less expensive than Co, the Ni component may be used to replace part of the Co component. Although the Ni is not an essential component, when it is contained in the alloy, the content of the Ni component is preferably 30 mass % or less, more preferably 20 mass % or less, and even more preferably 5 to 15 mass %. When the Ni content is over 30 mass %, the abrasion resistance and the local stress resistance, which are characteristics of Co based alloys, deteriorate. This would be attributable to the difference in stacking fault energy between Co and Ni.

### Fe: 5 mass % or less

Being much less expensive than Ni and similar to Ni component in characteristics, the Fe component may be used to replace part of the Ni component. The total content of the Fe and Ni is preferably 30 mass % or less, more preferably 20 mass % or less, and even more preferably 5 to 15 mass %. Although the Fe is not an essential component, when it is contained in the alloy, the content of the Fe component is preferably 5 mass % or less and more preferably 3 mass % or less in the range less than the Ni content. When the Fe content is over 5 mass %, the corrosion resistance and mechanical properties deteriorate.

### W and/or Mo: 5 mass % or more and 12 mass % or less in total

The W component and the Mo component contribute to solution-strengthening the matrix. The total content of the W component and/or the Mo component (at least one of W and Mo components) is preferably 5 to 12 mass % and more preferably 7 to 10 mass %. When the total content of the W component and the Mo component is less than 5 mass %, the solution strengthening of the matrix is insufficient. In contrast, when the total content of the W component and the Mo component is over 12 mass %, the brittle σ phase tends to be generated easily, resulting in deteriorated mechanical properties (i.e. toughness, ductility, etc.).

### Re: 2 mass % or less

The Re component contributes to solution-strengthening the matrix and improving corrosion resistance. Although the Re is not an essential component, when it is contained in the alloy to replace part of the W component or the Mo component, the content of the Re component is preferably 2 mass % or less and more preferably 0.5 to 1.5 mass %. When the Re content is over 2 mass %, the advantageous effects of the Re component become saturated, and the material costs become too high.

### Al and/or Si: more than 0.5 mass % and 4 mass % or less in total

The Al component was considered as one of the impurities of the alloy and was not to be intentionally included in the alloy, in the conventional arts. By contrast, in the invention unexpected effects have been revealed such that intentional addition of the Al component with higher content than before leads equal to or higher mechanical properties as well as much larger improvement in the oxidation resistance than the conventional arts.

The Si component serves as a deoxidant agent and contributes to improving the mechanical properties. In addition, similar to the Al component the Si component contributes to improving the oxidation resistance. By intentionally adding the Si component with higher content than before, there have been revealed more than expected effects in that the mechanical properties equal to or higher and the oxidation resistance much higher than the conventional arts are exhibited.

At least one of the Al content and the Si content is preferably more than 0.5 mass % and 3 mass % or less, more preferably 0.6 to 2.5 mass %, and even more preferably 0.7 to 2 mass %. Furthermore, the total content of the Al and the Si components is preferably more than 0.5 mass % and 4 mass % or less, more preferably 0.6 to 3.5 mass %, and even more preferably 0.7 to 3 mass %.

Even if either the Al content or the Si content is 0.5 mass % or less, the advantageous effects of the component cannot be sufficiently obtained, but there is no particular problem. When either the Al content or the Si content is over 3 mass %, or the total content of the Al and the Si components is over 4 mass %, the mechanical properties deteriorate.

The mechanism of improving the oxidation resistance due to intentional addition of the Al and/or Si components with higher contents than before has not been clarified yet at the present. On the other hand, from the various experiments by the inventors it has been confirmed that peeling/detachment of an oxide layer generated by thermal oxidation is suppressed (stickiness of the oxide layer is improved) due to existence of the Al and/or Si components. Details will be described later.

### Mn: 0.5 mass % or less

The Mn component serves as a deoxidant agent and a desulfurizing agent and contributes to improving the mechanical properties and the corrosion resistance. The Mn is not included in after-mentioned M component since the Mn has the atomic radius of 127 pm. Although the Mn is not an essential component, when it is contained in the alloy, the content of the Mn component is preferably 0.5 mass % or less and more preferably 0.01 to 0.3 mass %. When the Mn content is over 0.5 mass %, coarse grains of a sulfide (e.g. MnS) are generated, which causes deterioration of the mechanical properties and the corrosion resistance.

M component of transition metal other than W and Mo and with atomic radius of more than 130 pm: 0.5 to 4 mass % in total

As an M component being a transition metal other than W and Mo, having an atomic radius of more than 130 pm, and being capable to forming an MC type carbide phase of a simple cubic crystal system, there can be listed Ti, Zr, Hf, V, Nb and Ta components. These MC type carbide phases could become a precipitation strengthening (reinforcing) phase for the product of the invention. In addition, there can be listed Ti, Zr, V, Nb and Ta components as a component being capable to forming an MN type nitride phase. These MN type nitride phases could also become the precipitation strengthening phase. Moreover, the Ti, Zr, V, Nb and Ta components could form an M(C,N) type carbonitride phase of the precipitation strengthening phase.

In other words, it is preferable that at least one of the Ti, Zr, Hf, V, Nb and Ta components is included. The total content of the Ti, Zr, Hf, V, Nb and Ta components is preferably 0.5 to 4 mass %, more preferably 0.6 to 3 mass %, and even more preferably 0.7 to 2 mass %. When the total content is less than 0.5 mass %, the amount of precipitation of the precipitation strengthening phases such as the MC type carbide phase, the M(C,N) type carbonitride phase and/or the MN type nitride phase is insufficient, and as a result, the effect of improving the mechanical properties is insufficient. In contrast, when the total content is over 4 mass %, the mechanical properties deteriorate due to coarsening of the particles of the precipitation strengthening phase, accelerated generation of a brittle phase (e.g. σ phase), generation of particles of an oxide phase that does not contribute to precipitation strengthening, etc.

Furthermore, in the viewpoints of dispersed precipitation of particles of the precipitation strengthening phase (suppression of coarsening of the precipitation strengthening phase particles), it is more preferable that three or more of the Ti, Zr, Hf, V, Nb and Ta elements are contained in the alloy, and even more preferably four or more.

More specifically, when the Ti component is included, the Ti content is preferably 0.01 to 1 mass % and more preferably 0.05 to 0.8 mass %.

When the Zr component is included, the Zr content is preferably 0.05 to 1.5 mass % and more preferably 0.1 to 1.2 mass %. From the viewpoint of the mechanical strength, it is preferable that the Zr component is included. In contrast, from the viewpoint of the toughness, it is preferable that the Zr component is not included.

When the Hf component is included, the Hf content is preferably 0.01 to 0.5 mass % and more preferably 0.02 to 0.1 mass %.

When the V component is included, the V content is preferably 0.01 to 0.5 mass % and more preferably 0.02 to 0.1 mass %.

When the Nb component is included, the Nb content is preferably 0.02 to 1 mass % and more preferably 0.05 to 0.8 mass %.

When the Ta component is included, the Ta content is preferably 0.05 to 1.5 mass % and more preferably 0.1 to 1.2 mass %.

### Balance: Co component and Impurities

The Co component is one of the key components of the alloy and its content is the largest of all the components. As mentioned above, Co based alloy materials have the advantages of having corrosion resistance and abrasion resistance comparable to or superior to those of Ni based alloy materials.

The O component is one of the impurities of the alloy and is not to be intentionally included in the alloy. However, the O content of 0.04 mass % or less is acceptable as it does not have any serious negative influence on the mechanical properties of the Co based alloy product. When the O content is over 0.04 mass %, coarse grains of each oxide (e.g. Ti oxide, Zr oxide, Fe oxide, Al oxide, Si oxide, etc.) are generated, which causes deterioration of the mechanical properties.

The alloy powder preparation step S1 is a step of preparing a Co based alloy powder having a predetermined chemical composition. There is no particular limitation on the method and techniques for preparing the Co based alloy powder, and any conventional method and technique may be used. For example, a master ingot manufacturing substep S1a of manufacturing a master ingot by mixing, melting and casting the raw materials such that the ingot has a desired chemical composition and an atomization substep S1b of forming the alloy powder from the master ingot may be performed.

When intending to control the N content, it is preferable to perform the control in the atomization substep S1b. As an atomization method, any conventional method and technique may be basically used. For example, when controlling the N content, gas atomizing or centrifugal force atomizing with controlling the amount of nitrogen (nitrogen partial pressure) in the atomization atmosphere may be preferably used.

Furthermore, after the atomization substep S1b, a nitriding heat treatment substep S1c (not shown in FIG. 1) may be performed in which the alloy powder is subjected to a nitriding heat treatment (e.g., a heat treatment at 300°C or higher and 520°C or lower in an ammonia gas atmosphere), as needed. As the ammonia gas atmosphere, a mixed gas of ammonia (NH₃) gas and N₂ gas or a mixed gas of NH₃ gas and hydrogen (H₂) gas can be preferably used.

For ease of handling and ease of filling the alloy powder bed in the following selective laser melting step S2, the particle size of the alloy powder is preferably 5 to 100 µm, more preferably 10 to 70 µm, and even more preferably 10 to 50 µm. When the particle size of the alloy powder is less than 5 µm, fluidity of the alloy powder decreases in the following step S2 (i.e. formability of the alloy powder bed decreases), which causes deterioration of shape accuracy of the AM article. In contrast, when the particle size of the alloy powder is over 100 µm, controlling the local melting and rapid solidification of the alloy powder bed in the following step S2 becomes difficult, which leads to insufficient melting of the alloy powder and an increase in the surface roughness of the AM article.

In view of the above, an alloy powder classification substep S1d is preferably performed so as to regulate the alloy powder particle size to 5 to 100 µm. In the invention, when the particle size distribution of the obtained alloy powder is observed to fall within the desired range, it is assumed that the substep S1d has been performed. The alloy powder manufactured by the alloy powder preparation step S1 is one of a Co based alloy material according to the invention.

### (Selective Laser Melting Step)

The selective laser melting step S2 is a step of forming an AM article with a desired shape by selective laser melting (SLM) using the prepared Co based alloy powder. Specifically, this step comprises alternate repetition of an alloy powder bed preparation substep S2a and a laser melting solidification substep S2b. In the substep S2a, the Co based alloy powder is laid such that it forms an alloy powder bed having a predetermined thickness, and in the substep S2b, a predetermined region of the alloy powder bed is irradiated with a laser beam to locally melt and rapidly solidify the Co based alloy powder in the region.

In this step S2, in order to obtain a finished Co based alloy product having a desired microstructure, the microstructure of the AM article is controlled by controlling the local melting and the rapid solidification of the alloy powder bed.

More specifically, the thickness of the alloy powder bed h (unit: µm), the output power of the laser beam P (unit: W), and the scanning speed of the laser beam S (unit: mm/s) are preferably controlled to satisfy the following formulas: "15 < h < 150" and "67 × (P/S) - 3.5 < h < 2222 × (P/S) + 13". When these formulas are not satisfied, an AM article having a desired microstructure cannot be obtained.

While the output power P and the scanning speed S of the laser beam basically depend on configurations of the laser apparatus, they may be determined so as to satisfy the following formulas: "10 ≤ P ≤ 1000" and "10 ≤ S ≤ 7000".

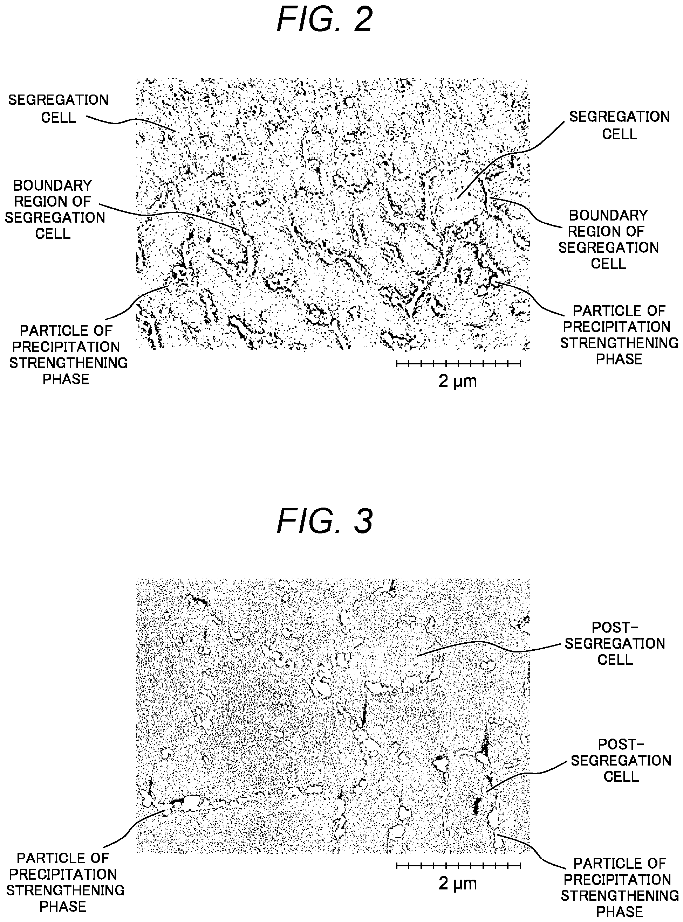

FIG. 2 is a scanning electron microscopy (SEM) image showing an exemplary microstructure of the Co based alloy AM article obtained by the SLM step S2. As shown in FIG. 2, the Co based alloy AM article obtained by the SLM step S2 have a unique microstructure.

The AM article is a polycrystalline body of matrix phase crystal grains. In the matrix phase crystal grains of the polycrystalline body, segregation cells with an average size of 0.13 to 2 µm are formed. In the viewpoint of the mechanical strength, segregation cells with an average size of 0.15 to 1.5 µm are more preferable. It may be recognized that particles of the precipitation strengthening phases are precipitated on a part of boundary regions of the segregation cells. In addition, from various experiments, it can be recognized that the matrix phase crystal grains with an average size of 5 to 150 µm are preferable.

In the present invention, the size of segregation cells is basically defined as the average of the long diameter and the short diameter. However, when an aspect ratio of the longer diameter and the short diameter is three or more, twice the short diameter may be adopted as the size of segregation cell. Furthermore, in the invention the average spacing of the particles of the precipitation strengthening phases is defined as being represented by the size of the segregation cell because the particles are precipitated on the boundary region of the segregation cell.

A more detailed microstructure observation by scanning transmission electron microscopy-energy dispersive X-ray spectrometry (STEM-EDX) has revealed that the components constituting the precipitation strengthening phases (Ti, Zr, Hf, V, Nb, Ta, C and N) segregate in the boundary regions between the neighboring segregation cells (i.e. in outer peripheral regions of micro-cells, similar to cell walls). It has also been observed that particles precipitating on the boundary regions among these segregation cells are particles of the precipitation strengthening phases such as the MC type carbide phase, the M(C,N) type carbonitride phase and/or the MN type nitride phase in which the transition metal M consists of at least one of Ti, Zr, Hf, V, Nb and Ta.

In this AM article, the segregation of the M components constituting the precipitation strengthening phases and the precipitation of particles of the precipitation strengthening phases can be observed also on the grain boundaries of the matrix phase crystal grains. The AM article manufactured by the selective laser melting step S2 is one aspect of a Co based alloy product according to the invention.

### (Strain Relaxation Annealing Step)

The strain relaxation annealing step S3 is an annealing step for the purpose of relaxing the residual internal strain of the AM article that may occur during the rapid solidification of the SLM step S2. This step S3 is not an essential step. However, in the case such that the AM article obtained by the SLM step S2 has a complicated shape or is a Co-based alloy product used in an environment with steep temperature changes, it is preferable to perform this step S3 in order to prevent undesired deformation in the initial stage of use.

The strain relaxation annealing is preferably performed at a temperature range of 600°C or more and less than 1100°C, more preferably 700°C to 1050°C, and even more preferably 800°C to 1000°C. There is no particular limitation on holding duration of the annealing, and it may be appropriately set in consideration of the volume/heat capacity of the AM article to be annealed and the annealing temperature. Furthermore, there is no particular limitation on a cooling method after the strain relaxation annealing, and water cooling, oil cooling, air cooling, or furnace cooling may be adopted.

FIG. 3 is an SEM image showing an exemplary microstructure of a Co based alloy AM article obtained by the strain relaxation annealing step S3. The Co based alloy AM article shown in FIG. 3 is obtained by subjecting the inventive alloy product IA-1 which will be described later to strain relaxation annealing held at 900°C for 1 hour . As shown in FIG. 3, the Co based alloy AM article obtained through the strain relaxation annealing also have a unique microstructure.

By the strain relaxation annealing, it has been found that the components segregated in the boundary regions of the segregation cells diffuse, combine and form the precipitation strengthening phases on/along the boundary regions, and as a result, cell walls of the segregation cells almost disappear (more specifically, it becomes difficult to observe the cell walls of segregation cells by a microstructure observation). In other words, the particles of precipitation strengthening phases are formed dispersedly along regions where the cell walls seem to have existed (on the boundary regions of ex-segregation cells). In the invention, such a region surrounded with the particles of precipitation strengthening phases precipitating on/along the boundary regions of ex-segregation cells is referred to as a "post-segregation cell".

It can be considered that the post-segregation cell has almost the same outer form as the segregation cell, and thus an average size of post-segregation cells is in a range of 0.13 to 2 µm. Meanwhile, because the particles of precipitation strengthening phases can act a role as pinning points against grain boundary migration of the matrix phase crystal grains, coarsening of the matrix phase crystal grains is suppressed.

The Co based alloy AM article thus obtained has an average size of the matrix phase crystal grains of 5 to 150 µm, and includes the post-segregation cells with an average size of 0.13 to 2 µm in each of the matrix phase crystal grains, in which the particles of precipitation strengthening phases precipitate dispersedly along the boundaries of the post-segregation cells. The Co based alloy AM article obtained through this step S3 is one aspect of a Co based alloy product according to the invention.

Even in the case that the Co-based alloy product not subjected to this step S3 is used as a high-temperature member, if the temperature of the use environment is equivalent to the temperature condition of strain relaxation annealing, it can be considered that a state of the product will become the same as when the step S3 is performed, along with the use (seeing FIG. 3). In other words, this step S3 includes the thermal history experienced by the use of high temperature members. Then, such a high temperature member is also considered as one aspect of a Co-based alloy product according to the invention.

### (Finishing Step)

The finishing step S4 is a step, to the AM article obtained by the step S2 or obtained through the step S3, forming a thermal barrier coating (TBC) and/or finishing a surface. There are no particular limitations on the formation of TBC and the surface finishing, and conventional methods can be used as appropriate. Although this step S4 is not an essential step, it may be appropriately performed according to the application and usage environment of the Co based alloy product. Such a Co-based alloy AM article obtained through the step S4 is also considered as one aspect of a Co-based alloy product according to the invention.

Meanwhile, when the formation of TBC involves heat treatment and a temperature of the heat treatment matches the temperature condition of strain relaxation annealing, it corresponds to performing both of the steps S3 and S4 at the same time.

### [Co Based Alloy Product]

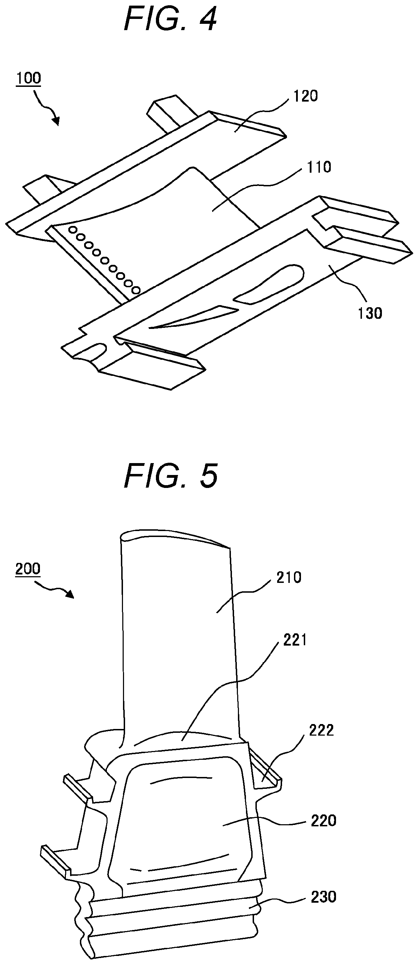

FIG. 4 is a schematic illustration of a perspective view showing an exemplary turbine stator blade which is a Co based alloy product as a high temperature member according to an embodiment of the invention. As shown in FIG. 4, the turbine stator blade 100 includes an airfoil part 110, an inner ring side end wall 120, and an outer ring side end wall 130. Inside the airfoil part 110 is often formed a cooling structure.

FIG. 5 is a schematic illustration of a perspective view showing an exemplary turbine rotor blade as another high temperature member according to an embodiment of the invention. As shown in FIG. 5, the turbine rotor blade 200 includes, roughly, an airfoil part 210, a shank 220, and a root part 230 (also referred as a dovetail). The shank 220 is provided with a platform 221 and radial fins 222. Inside the airfoil part 210 is often formed a cooling structure.

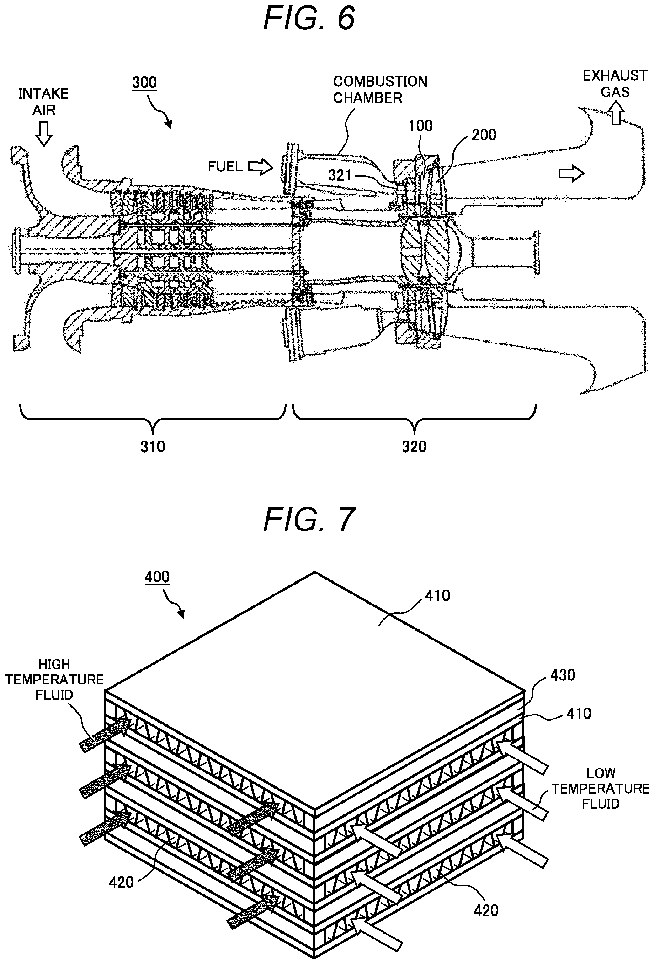

FIG. 6 is a schematic illustration of a cross-sectional view showing an exemplary gas turbine equipped with a Co based alloy product according to an embodiment of the invention. As shown in FIG. 6, the gas turbine 300 roughly includes a compression part 310 for compressing intake air and a turbine part 320 for blowing combustion gas of a fuel on turbine blades to obtain rotation power. The high temperature member of the invention can be preferably used as a turbine nozzle 321, the turbine stator blade 100 and/or the turbine rotor blade 200 inside the turbine part 320.

The high temperature member according to the invention is not limited to gas turbine applications but may be used for other turbine applications (e.g. steam turbines) and component used under high temperature environment in other machines/apparatuses.

FIG. 7 is a schematic illustration of a perspective view showing an exemplary heat exchanger which is another Co based alloy product as a high temperature member according to an embodiment of the invention. A heat exchanger 400 shown in FIG. 7 is an example of a plate-fin type heat exchanger and has a basic structure in which a separation layer 410 and a fin layer 420 are alternatively stacked each other. Both ends in the width direction of flow channels in the fin layer 420 are sealed by a side bar portion 430. Heat exchanging between high temperature fluid and low temperature fluid can be done by flowing the high temperature fluid and the low temperature fluid alternately into adjacent fin layers 420.

The heat exchanger 400 of the invention is formed integrally without soldering joining or welding joining the conventional parts constituting a heat exchanger such as separation plates, corrugated fins and side bars. Consequently, the heat resistance and weight can be reduced compared with conventional heat exchangers. In addition, the heat transfer efficiency can be higher by forming an appropriate concavo-convex pattern on the surfaces of the flow channels and making the fluid into turbulence. Improving the heat transfer efficiency leads to downsizing of the heat exchanger.

### EXAMPLES

The present invention will be hereinafter described in more detail with experimental examples. It should be noted that the invention is not limited to these examples.

### [Experiment 1]

### (Preparation of Inventive Alloy Materials IM-1 and IM-2 and Reference Alloy Material RM-1)

Co based alloy materials having the chemical compositions shown in Table 1 were prepared. Specifically, first, the master ingot manufacturing substep S1a was performed, in which the raw materials were mixed and subjected to melting and casting by a vacuum high frequency induction melting method so as to form a master ingot (weight: approximately 2 kg) for each alloy material. Next, the atomization substep S1b was performed in which each master ingot was remelted and subjected to gas atomizing to form each alloy powder. In the substep S1b, the inventive alloy material IM-1 and the reference alloy material RM-1 were prepared in an argon (Ar) gas atmosphere, and the inventive alloy material IM-2 was prepared in a nitrogen (N₂) gas atmosphere.

Then, each alloy powder thus obtained was subjected to the alloy powder classification substep S1c to control the particle size of alloy powder. Each alloy powder was classified into an alloy powder with a particle size of 5 to 25 µm.

**TABLE 1 Chemical Compositions of Inventive Alloy Materials IM-1 and IM-2 and Reference Alloy Material RM-1.**

| Alloy Material | Chemical Composition (mass %) | | | | | | | | | | | | | | | | | |
|---|---|---|---|---|---|---|---|---|---|---|---|---|---|---|---|---|---|---|
| | C | N | B | Cr | Ni | Fe | W | Ti | Zr | Hf | V | Nb | Ta | Al | Si | Mn | Co | O |
| IM-1 | 0.17 | 0.015 | 0.01 | 24.9 | 10.5 | 0.01 | 7.6 | 0.28 | 0.45 | - | - | 0.12 | 0.40 | 1.0 | 0.10 | 0.01 | Bal. | 0.012 |
| IM-2 | 0.12 | 0.066 | 0.01 | 24.7 | 10.4 | 0.01 | 7.5 | 0.20 | 0.55 | 0.02 | 0.05 | 0.15 | 0.40 | 0.60 | 0.55 | 0.20 | Bal. | 0.020 |
| RM-1 | 0.16 | 0.009 | 0.01 | 24.9 | 10.4 | 0.01 | 7.6 | 0.29 | 0.51 | - | - | 0.11 | 0.40 | 0.05 | 0.05 | 0.01 | Bal. | 0.015 |

| | | | | | | | | | | | | | | | | | | |
|---|---|---|---|---|---|---|---|---|---|---|---|---|---|---|---|---|---|---|
| "-" indicates that the element was not intentionally included. "Bal." indicates inclusion of impurities other than O. | | | | | | | | | | | | | | | | | | |

As shown in Table 1, each of IA-1 and IA-2 is an alloy powder having a chemical composition that satisfies the specifications of the invention. In contrast, RA-1 is an alloy powder corresponding to Patent Literature 2.

### [Experiment 2]

### (Examination of SLM Conditions in Selective Laser Melting Step)

AM articles (8 mm in diameter × 10 mm in length) were formed of IM-1 prepared in Experiment 1 by the SLM process (selective laser melting step S2). The output power of the laser beam P was set at 85 W, and the local heat input P/S (unit: W × s/mm = J/mm) was controlled by varying the thickness of the alloy powder bed h and the scanning speed (mm/s) of the laser beam S. Controlling the local heat input corresponds to controlling the cooling rate at an irradiated portion.

The AM articles formed above were each subjected to microstructure observation to measure the average size of segregation cells. The microstructure observation was performed by SEM. Also, the obtained SEM images were subjected to image analysis using an image processing program (ImageJ, a public domain program developed at the National Institutes of Health (NIH) in U.S.A.) to measure the average size of segregation cells.

The AM articles having the average segregation cell size within a range of 0.13 to 2 µm were judged as "Passed", and the others were judged as "Failed". Based on the results of the measurement, it has been confirmed that in the selective laser melting step S2, the SLM process is preferably performed while controlling the thickness of the alloy powder bed h (unit: µm), the output power of the laser beam P (unit: W), and the scanning speed of the laser beam S (unit: mm/s) such that they satisfy the following formulas: "15 < h < 150" and "67 × (P/S) - 3.5 < h < 2222 × (P/S) + 13".

### [Experiment 3]

### (Manufacturing of Inventive Alloy Products IA-1 and IA-2 and Reference Alloy Product RA-1)

An AM article (10 mm in diameter × 50 mm in length) was formed of each of IA-1, IA-2 and RA-1 prepared in Experiment 1 by the SLM process (selective laser melting step S2). The thickness of each alloy powder bed h and the output power of the laser beam P were set at 100 µm and 100 W, respectively. The local heat input P/S (unit: W × s/mm = J/mm) was controlled by varying the scanning speed (mm/s) of the laser beam S so as to satisfy the passing conditions examined in Experiment 2. In this Experiment, as-built AM articles just after the step 2 made from IM-1, IM-2 and RM-1 were named to IA-1, IA-2 and RA-1, respectively.

### (Microstructure Observation, Mechanical Properties Testing and Oxidation Testing)

Test pieces for microstructure observation, mechanical properties testing and oxidation testing were taken from IA-1, IA-2 and RA-1 and subjected to microstructure observation, mechanical properties testing and oxidation testing.

The microstructure observation was performed by SEM and through image analysis of SEM images thereof in a similar manner to Experiment 2 to measure the average interparticle distance of the precipitation strengthening phase particles in the matrix phase crystal grains. As the results, it has been confirmed that the average interparticle distance of the precipitation strengthening phase particles is within a range from 0.13 to 2 µm in all of IA-1, IA-2 and RA-1. Here, FIG. 2 is an SEM image of IA-1.

As to the mechanical properties testing, IA-1, IA-2 and RA-1 were subjected to a room-temperature tensile test to measure the 0.2% yield strength and the tensile strength, and to a creep test at 850°C under a stress of 196 MPa to measure the creep rupture time. The results of the mechanical properties testing are shown in Table 2.

**Table 2 Mechanical Properties Testing Results of Inventive Alloy Products IA-1 and IA-2 and Reference Alloy Product RA-1.**

| Alloy Product | Alloy Material | Room-temperature Tensile Test | | Creep Test |
|---|---|---|---|---|
| | | 0.2% Yield Strength (MPa) | Tensile Strength (MPa) | Creep Rupture Time (h) |
| IA-1 | IM-1 | 723 | 1122 | 141 |
| IA-2 | IM-2 | 756 | 1151 | 160 |
| RA-1 | RM-1 | 649 | 1063 | 93 |

As shown in Table 2, it is confirmed that IA-1 and IA-2 have mechanical properties (0.2% yield strength, tensile strength, creep rupture time) equal to or higher than RA-1. Because RA-1 is regarded to have mechanical properties equal to or higher than the precipitation-strengthened Ni-based alloy material (see Patent Literature 2), it can be said that the alloy products of the invention also have the mechanical properties equal to or higher than precipitation-strengthened Ni-based alloy material.

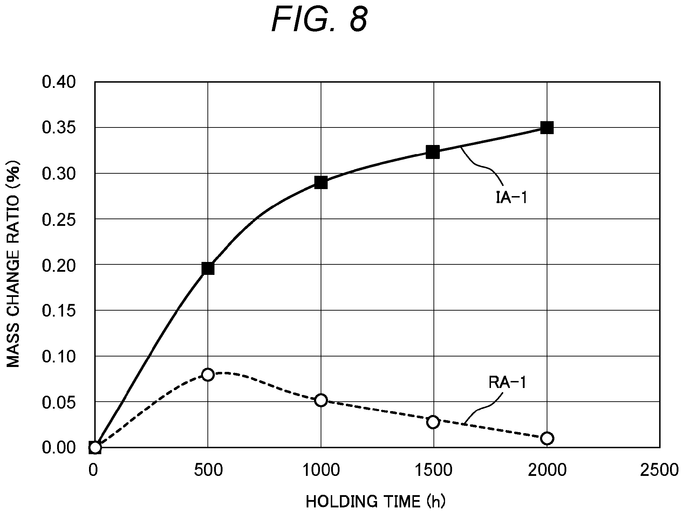

As an oxidation test, the test pieces were raised to 950°C in the air atmosphere, and the mass change ratio of each of the test pieces was measured every 500 hours of holding. The mass change ratio referred to here is defined as the mass of the test piece at the holding time divided by the initial mass. When the test piece is oxidized by the oxidation test, an increase in the mass change ratio due to the amount of oxide film formed (strictly, the oxygen content contained in the oxide film) should be observed. FIG. 8 is a graph showing a relationship between the holding time and the mass change ratio in the oxidation test of the Co-based alloy product.

As shown in FIG. 8, the mass change ratio of IA-1 increases monotonically with increasing the holding time (for example, the mass change ratio of 1000 hours holding is larger than that of 500 hours holding). In contrast, RA-1 shows a maximum mass change ratio around 500 hours, and then the mass change ratio decreases (the mass change ratio of 1000 hours holding becomes smaller than that of 500 hours holding). Meanwhile, although not shown, IA-2 showed similar results as IA-1.

The decrease after the mass change ratio reaches the maximum value in the oxidation test means that in the competition between formation of the oxide film and separation thereof there are more peeling/falling off than forming. This leads to oxidative thinning in high temperature members. From the viewpoint of oxidation resistance, it is desirable that there is little oxidative thinning. It can be said that IA-1 and IA-2 have better oxidation resistance than RA-1 from the results of the oxidation test. Meanwhile, since the Co-based alloy material is originally excellent in oxidation resistance, it can be said that even RA-1 has better oxidation resistance than the precipitation-strengthened Ni-based alloy material.

When cross section of the test piece after the oxidation test was observed by using SEM, it was confirmed that the test piece has similar microstructure as in FIG. 3. In other words, in the case that the AM article not subjected to the strain relaxation annealing step S3 is used as it is as a high temperature member, when the temperature of operating environment is equivalent to the temperature condition of the strain relaxation annealing, it is confirmed that the AM article becomes the same state where the step S3 is conducted, accompanying usage thereof.

The above-described embodiments and experimental examples have been specifically given in order to help with understanding on the present invention, but the invention is not limited to the described embodiments and experimental examples. For example, a part of an embodiment may be replaced by known art, or added with known art. That is, a part of an embodiment of the invention may be combined with known art and modified based on known art, as far as no departing from a technical concept of the invention.

### LEGEND

- 100: turbine stator blade;
- 110: airfoil part;
- 120: inner ring side end wall;
- 130: outer ring side end wall;
- 200: turbine rotor blade;
- 210: airfoil part;
- 220: shank;
- 221: platform;
- 222: radial fin;
- 230: root part;
- 300: gas turbine;
- 310: compression part;
- 320: turbine part;
- 321: turbine nozzle;
- 400: heat exchanger;
- 410: separation layer;
- 420: fin layer; and
- 430: side bar portion.

## Claims

1. A product formed of a cobalt based alloy material, having a chemical composition comprising:
0.08 to 0.25 mass % of carbon;
0.003 to 0.2 mass % of nitrogen, the total amount of the carbon and the nitrogen being 0.083 to 0.28 mass %;
0.1 mass % or less of boron;
10 to 30 mass % of chromium;
5 mass % or less of iron, 30 mass % or less of nickel, the total amount of the iron and the nickel being 30 mass % or less;
tungsten and/or molybdenum, the total amount of the tungsten and the molybdenum being 5 to 12 mass %;
aluminum and/or silicon, at least one of the aluminum and the silicon being more than 0.5 mass % and 3 mass % or less, and the total amount of the aluminum and the silicon being more than 0.5 mass % and 4 mass % or less;
0.5 mass % or less of manganese;
0.5 to 4 mass % of an M component being a transition metal other than tungsten and molybdenum and having an atomic radius of more than 130 pm; and
the balance being cobalt and impurities, the impurities including 0.04 mass % or less of oxygen,
wherein the product is a polycrystalline body of matrix phase crystal grains, and
wherein in the matrix phase crystal grains, segregation cells with an average size of 0.13 to 2 µm are formed, in that the M component is segregated in boundary regions of the segregation cells, or
wherein in the matrix phase crystal grains, post-segregation cells with an average size of 0.13 to 2 µm are formed, in that particles of MC type carbide phase, M(C,N) type carbonitride phase and/or MN type nitride phase including the M component are dispersedly precipitated along boundary regions of the post-segregation cells.

2. The product according to claim 1, wherein
the chemical composition comprises the nitrogen of more than 0.04 mass % and 0.2 mass % or less, the total amount of the carbon and the nitrogen being more than 0.12 mass % and 0.28 mass % or less.

3. The product according to claim 1 or 2, wherein
the M component of the chemical composition is at least one of titanium, zirconium, hafnium, vanadium, niobium and tantalum.

4. The product according to claim 3, wherein:
in the case that the chemical composition includes the titanium as the M component, content of the titanium is 0.01 to 1 mass %;
in the case that the chemical composition includes the zirconium as the M component, content of the zirconium is 0.05 to 1.5 mass %;
in the case that the chemical composition includes the hafnium as the M component, content of the hafnium is 0.01 to 0.5 mass %;
in the case that the chemical composition includes the vanadium as the M component, content of the vanadium is 0.01 to 0.5 mass %;
in the case that the chemical composition includes the niobium as the M component, content of the niobium is 0.02 to 1 mass %; and
in the case that the chemical composition includes the tantalum as the M component, content of the tantalum is 0.05 to 1.5 mass %.

5. The product according to claim 3 or 4, wherein
the zirconium is an essential component as the M component of the chemical composition.

6. The product according to claim 3 or 4, wherein
the M component of the chemical composition is three or more of the titanium, the zirconium, the hafnium, the vanadium, the niobium and the tantalum.

7. The product according to any one of claims 1 to 6, wherein
the product exhibits an oxidation resistance property in that by an oxidation test under conditions of a temperature 950°C in the air atmosphere, a mass change ratio for 1000 hours holding is larger than that for 500 hours holding.

8. The product according to any one of claims 1 to 7, wherein
the product is a high temperature member.

9. The product according to claim 8, wherein
the high temperature member is a turbine stator blade, a turbine rotor blade, a turbine combustor nozzle, or a heat exchanger.

10. A cobalt based alloy material, having a chemical composition comprising:
0.08 to 0.25 mass % of carbon;
0.003 to 0.2 mass % of nitrogen, the total amount of the carbon and the nitrogen being 0.083 to 0.28 mass %;
0.1 mass % or less of boron;
10 to 30 mass % of chromium;
5 mass % or less of iron, 30 mass % or less of nickel, the total amount of the iron and the nickel being 30 mass % or less;
tungsten and/or molybdenum, the total amount of the tungsten and the molybdenum being 5 to 12 mass %;
aluminum and/or silicon, at least one of the aluminum and the silicon being more than 0.5 mass % and 3 mass % or less, and the total amount of the aluminum and the silicon being more than 0.5 mass % and 4 mass % or less;
0.5 mass % or less of manganese;
0.5 to 4 mass % of an M component being a transition metal other than tungsten and molybdenum and having an atomic radius of more than 130 pm; and
the balance being cobalt and impurities, the impurities including 0.04 mass % or less of oxygen.

11. The cobalt based alloy material according to claim 10, wherein
the chemical composition comprises the nitrogen of more than 0.04 mass % and 0.2 mass % or less, the total amount of the carbon and the nitrogen being more than 0.12 mass % and 0.28 mass % or less.

12. The cobalt based alloy material according to claim 10 or 11, wherein
the M component of the chemical composition is at least one of titanium, zirconium, hafnium, vanadium, niobium and tantalum.

13. The cobalt based alloy material according to claim 12, wherein:
in the case that the chemical composition includes the titanium as the M component, content of the titanium is 0.01 to 1 mass %;
in the case that the chemical composition includes the zirconium as the M component, content of the zirconium is 0.05 to 1.5 mass %;
in the case that the chemical composition includes the hafnium as the M component, content of the hafnium is 0.01 to 0.5 mass %;
in the case that the chemical composition includes the vanadium as the M component, content of the vanadium is 0.01 to 0.5 mass %;
in the case that the chemical composition includes the niobium as the M component, content of the niobium is 0.02 to 1 mass %; and
in the case that the chemical composition includes the tantalum as the M component, content of the tantalum is 0.05 to 1.5 mass %.

14. The cobalt based alloy material according to claim 12 or 13, wherein
the zirconium is an essential component as the M component of the chemical composition.

15. The cobalt based alloy material according to claim 12 or 13, wherein
the M component of the chemical composition is three or more of the titanium, the zirconium, the hafnium, the vanadium, the niobium and the tantalum.

16. The cobalt based alloy material according to any one of claims 10 to 15, wherein
the alloy material is a powder having a particle size range of 5 to 100 µm.
